# EUROPÄISCHE PATENTSCHRIFT

(11) **EP 2 242 682 B1**
(45) Veröffentlichungstag und Bekanntmachung des Hinweises auf die Patenterteilung: **23.05.2012**
(21) Anmeldenummer: 09712562.9
(22) Anmeldetag: 11.02.2009
(51) Int. Cl.: B64C 1/06, B29C 65/00

(54) **VERFAHREN ZUM VERBINDEN VON ZWEI RUMPFSEKTIONEN UNTER SCHAFFUNG EINES QUERSTOßES SOWIE QUERSTOßVERBINDUNG**
METHOD OF CONNECTING TWO FUSELAGE SECTIONS WITH THE FORMATION OF A TRANSVERSE JOINT, AND TRANSVERSE JOINT CONNECTION
PROCÉDÉ POUR RELIER DEUX SECTIONS DE FUSELAGE PAR LA CRÉATION D'UN JOINT TRANSVERSAL AINSI QUE D'UNE LIAISON DE JOINT TRANSVERSAL

(30) Priorität: 20.02.2008 DE 102008010197
(43) Veröffentlichungstag der Anmeldung: 27.10.2010
(73) Patentinhaber: Airbus Operations GmbH, 21129 Hamburg (DE)
(72) Erfinder: SAUERMANN, Axel, 21717 Helmste-Deinste (DE)
(74) Vertreter: UEXKÜLL & STOLBERG
(86) Internationale Anmeldenummer: PCT/EP2009/051525
(87) Internationale Veröffentlichungsnummer: WO 2009/103635

(56) Entgegenhaltungen:
- WO-A-01/14208
- WO-A-2008/029049
- CH-A- 278 090
- US-A1- 2006 060 705

## Beschreibung

Die Erfindung betrifft ein Verfahren zum Verbinden von zwei mit einem faserverstärkten Kunststoffmaterial gebildeten Rumpfsektionen, insbesondere gewickelten Rumpfsektionen für Flugzeugrumpfzellen, mit einer Vielzahl von innenseitig auf einer Außenhaut gleichmäßig parallel zueinander beabstandet verteilt angeordneten Stringern unter Schaffung eines Querstoßes.

Darüber hinaus betrifft die Erfindung zwei Ausgestaltungen einer Querstoßverbindung zwischen zwei Rumpfsektionen.

Im modernen Flugzeugbau ersetzen kohlefaserverstärkte Verbundbauteile (CFK-Bauteile) zunehmend die klassischen Aluminiumlegierungsmaterialien. So werden beispielsweise Rumpfsektionen, einschließlich der innenseitig angeordneten Stringer, einstückig im Wickelverfahren aus CFK hergestellt. Hierbei wird eine geeignete Verstärkungsfaseranordnung vorzugsweise in der Hauptlastrichtung in eine Kunststoffmatrix eingebettet. Die Kunststoffmatrix kann beispielsweise mit duroplastischen oder mechanisch hochbelastbaren thermoplastischen Kunststoffen gebildet sein. Als duroplastische Kunststoffe finden bevorzugt Epoxidharz-Systeme Verwendung, während im Bereich der thermoplastischen Kunststoffe beispielsweise Polyetheretherketone (PEEK) eingesetzt werden. Zur Schaffung der Verstärkungsfaseranordnung werden in der Regel Kohlefasern, Glasfasern, Aramid^{®}-Fasern, Kevlar^{®}-Fasern, keramische Fasern oder Naturfasern eingesetzt.

Ein großes Problem stellt hierbei das Zusammenfügen mehrerer CFK-Rumpfsektionen zu einer Rumpfzelle dar, weil ein Toleranzausgleich bei den verfestigten CFK-Rumpfsektionen aufgrund deren hoher Eigensteifigkeit nicht mehr möglich ist und zudem die Toleranzen, insbesondere mit Blick auf die Querschnittsgeometrie, beim Wickelverfahren prinzipbedingt immer erheblich größer ausfallen als im Fall der klassischen Aluminiumbauweise. Diese unvermeidlich höheren Fertigungstoleranzen ergeben sich unter anderem aus Schrumpfungsprozessen bei der Aushärtung im Autoklaven, unterschiedlichen Verstärkungsfaserdichten beim Ablege- bzw. beim Wickelprozess, Temperatur- und Druckschwankungen, Qualitätsschwankungen der Faserhalbzeuge sowie weiteren Störgrößen. Das Zusammenfügen der Rumpfsektionen darf jedoch aus statischen Gründen keinesfalls unter mechanischer Spannung erfolgen.

Eine Möglichkeit zum Toleranzausgleich stellen Zulagen (so genannte "Shims") dar, die in flüssiger, aushärtbarer und/oder in fester Form in den Fügespalt zwischen den Rumpfsektionen eingebracht werden. Diese Zulagen können sich jedoch nachteilig auf die mechanische Belastbarkeit der verbundenen Rumpfsektionen auswirken und erhöhen darüber hinaus erheblich den Montageaufwand, da beispielsweise flüssige, aushärtbare "Shims" eine lange Aushärtezeit benötigen, in der die zusammenzufügenden Rumpfsektionen in Position gehalten werden müssen. Zudem ist die Anwendung von Zulagen in einigen hochbelasteten Verbindungsbereichen aus Sicherheitsgründen nicht zulässig.

Aus US 2006/0060705 ist eine Schalenstruktur bekannt, bei der ein erster Plattenabschnitt mit einer ersten Außenhaut und einem ersten Versteifungselement in Verbindung mit der Außenhaut, neben dem ersten ein zweiter Plattenabschnitt mit einer zweiten Außenhaut und einem zweiten Versteifungselement in Verbindung mit der zweiten Außenhaut sowie ein Übergangsteil, das sich über einen ersten Randbereich des ersten Plattenabschnitts und einen zweite Randbereich des zweiten Plattenabschnitts erstreckt, vorgesehen ist. Hierbei ist ein erster Endabschnitt des Übergangsteils mit dem ersten Versteifungselement und der ersten Außenhaut verbunden, und ein zweiter Endabschnitt des Übergangsteils ist mit dem zweiten Versteifungselement und der zweiten Außenhaut verbunden, so dass der erste Plattenabschnitt mit dem zweiten Plattenabschnitt verbunden ist.

Der Erfindung liegt daher die Aufgabe zu Grunde, ein Verfahren zum Zusammenfügen von insbesondere gewickelten CFK-Rumpfsektionen zu schaffen, das einen einfachen Toleranzausgleich in einem kontinuierlichen, industriellen Fertigungsprozess ermöglicht.

Diese Aufgabe wird durch die folgenden Verfahrensschritte des Patentanspruchs 1 gelöst:
a) Ausrichten einer ersten und einer zweiten Rumpfsektion zueinander,
b) Erwärmen und Anpassen mindestens einer mit einem faserverstärkten thermoplastischen Kunststoffmaterial gebildeten Querstoßlasche derart, dass ein Toleranzausgleich zwischen abweichenden Querschnittsgeometrien der ersten und der zweiten Rumpfsektion möglich wird oder Erwärmen mindestens eines Endbereichs einer zweiten mit einem faserverstärkten thermoplastischen Kunststoffmaterial gebildeten Rumpfsektion, und
c) Zusammenfügen der beiden Rumpfsektionen.

Nach Maßgabe einer ersten Verfahrensalternative ist vorgesehen, dass die beiden zusammenzufügenden Rumpfsektionen vorzugsweise mit einem duroplastischen CFK-Material gebildet sind. Der Toleranzausgleich beim Zusammenfügen erfolgt in diesem Fall durch das Erwärmen und im Fall von Toleranzabweichungen erfolgende Anpassen bzw. Umformen der zur endgültigen Herstellung der Verbindung eingesetzten Querstoßlaschen und/oder Stringerkupplungen, die zu diesem Zweck mit einem unter Wärmeeinfluss verformbaren faserverstärkten, thermoplastischen Kunststoffmaterial gebildet sind. Die Umformung erfolgt derart, dass eine möglichst vollflächige Anlage der Querstoßlasche auf der Innenseite der Außenhaut der Rumpfsektion und der Stringer an den Stringerkupplungen erreicht wird. Die Umformung der Querstoßlaschen und/oder der Stringerkupplungen erfolgt in der Regel durch eine Parallelverschiebung von mindestens zwei geradlinigen (endseitigen) Abschnitten in entgegengesetzter Richtung zueinander, wobei ein zwischen jeweils zwei Abschnitten liegender gleichfalls geradliniger Mittelabschnitt eine geringfügige Neigung erfährt.

Im Fall einer zweiten Verfahrensalternative sind vorzugsweise die beiden zu verbindenden Rumpfsektionen zumindest endseitig mit einem gewickelten thermoplastischen CFK-Material gebildet. Zur Durchführung des Verfahrens werden die zu fügenden Rumpfsektionen zueinander ausgerichtet, wobei der Toleranzausgleich durch das Erwärmen eines Endabschnitts der anzufügenden Rumpfsektion erfolgt. Nach dem erfolgten Ausgleich der gegebenenfalls bestehenden Abweichungen zwischen den Querschnittsgeometrien der zusammenzufügenden Rumpfsektionen durch zumindest abschnittsweises Stauchen und/oder Dehnen des erwärmten Endbereichs der anzufügenden Rumpfsektion erfolgt die Verbindung der beiden Rumpfsektionen in konventioneller Weise unter Einsatz von zusätzlichen Verbindungskomponenten.

Als ein geeignetes thermoplastisches Kunststoffmaterial für die CFK-Bauteile, insbesondere die Rumpfsektionen, die Querstoßlaschen und die Stringerkupplungen hat sich beispielsweise PEEK (Polyetheretherketon) erwiesen, während Epoxidharz-Systeme zur Bildung der Harzmatrix im Fall von duroplastischen CFK-Bauteilen Verwendung finden.

Nach Maßgabe einer vorteilhaften Fortbildung der ersten Verfahrensvariante ist vorgesehen, dass die Rumpfsektionen mittels der mindestens einen Querstoßlasche verbunden werden. Dies ermöglicht die Beibehaltung der bislang angewendeten konventionellen Verbindungstechnik durch innenseitig im Querstoßbereich zwischen zwei Rumpfsektionen angeordnete und befestigte Querstoßlaschen. Zunächst werden etwaige Toleranzabweichungen, insbesondere ein Höhenversatz, zwischen den zusammenzufügenden Rumpfsektionen im Bereich des Querstoßes mit einem geeigneten Messsystem ermittelt, was beispielsweise mit einem computergesteuerten Laser-Messsystem erfolgen kann. Anschließend werden die mit dem faserverstärkten thermoplastischen Kunststoffmaterial gebildeten Querstoßlaschen in einem elektrisch beheizbaren Formwerkzeug soweit erwärmt, bis eine problemlose, verzugfreie plastische Verformung möglich ist. Mittels der Formwerkzeuge erfolgt erforderlichenfalls auf der Grundlage der vom Laser-Messsystem ermittelten Toleranzabweichungen bzw. der Ist-Geometriedaten des Querstoßes die Umformung bzw. Anpassung der Querstoßlaschen zum Toleranzausgleich zwischen den Rumpfsektionen. Nach der erfolgten Anpassung bzw. der Umformung der mindestens einen Querstoßlasche wird die erkaltete Querstoßlasche aus dem Formwerkzeug entnommen und innenseitig beidseitig mit den Endbereichen der Rumpfsektionen unter Schaffung eines Querstoßes in herkömmlicher Weise fest verbunden. Ist die Verwendung mehrerer Querstoßlaschen erforderlich, so können zur Vereinfachung des Verfahrensablaufs die Querstoßlaschen unmittelbar nacheinander erwärmt und umgeformt bzw. angepasst werden und anschließend zur Verbindung der Rumpfsektionen montiert werden. Die Anwendung eines computergesteuerten Laser-Messsystems ermöglicht die Integration des Verfahrens in eine vollautomatische Produktionslinie. Die mindestens eine Querstoßlasche wird zur Durchführung der Anpassung bzw. Umformung bis auf eine Erweichungstemperatur des für die Bildung der Matrix eingesetzten thermoplastischen Kunststoffmaterials erhitzt. Bei dem bevorzugt eingesetzten thermoplastischen Hochleistungskunststoffmaterial Polyetheretherketon (PEEK) liegt die Schmelztemperatur bei 330 °C.

Gemäß einer weiteren Ausgestaltung des Verfahrens wird die mindestens eine Querstoßlasche mit jeweils einem Endbereich einer Rumpfsektion durch Nieten, Schrauben, Kleben, Schweißen oder eine beliebige Kombination hiervon verbunden.

Durch diese Ausgestaltung lässt sich das erfindungsgemäße Verfahren problemlos in vorhandene Fertigungslinien unter Beibehaltung der bekannten Fügeverfahren integrieren.

Eine weitere vorteilhafte Ausgestaltung sieht vor, dass mindestens eine Stringerkupplung zum Ermöglichen eines Toleranzausgleichs erwärmt und angepasst wird.

Zu diesem Zweck werden zunächst die vorhandenen Toleranzabweichungen zwischen den jeweils gegenüberliegenden Stringern in den zusammenzufügenden Rumpfsektionen ermittelt, was beispielsweise wiederum mittels eines berührungslosen Laser-Messsystems erfolgen kann. Anschließend wird die mindestens eine Stringerkupplung in ein geeignetes elektrisch beheizbares Formwerkzeug eingelegt und erwärmt. Im Formwerkzeug erfolgt dann für den Fall, dass Toleranzabweichungen, insbesondere ein Höhenversatz und/oder ein Seitenversatz zwischen den zu verbindenden Stringern festgestellt werden, die Anpassung bzw. die Umformung auf der Grundlage der vom Messsystem ermittelten Ist-Geometriedaten mit Blick auf die vorgegebenen Soll-Geometriedaten für einen optimalen Querstoß zwischen den Rumpfsektionen, wobei in der Regel eine umfangsseitige Minimierung und Vergleichmäßigung des Spaltmaßes angestrebt wird. Hierbei ist es erforderlich, dass die mindestens eine Stringerkupplung zumindest bis auf die Erweichungstemperatur des im Einzelfall eingesetzten thermoplastischen Kunststoffmaterials erhitzt wird, bei dem es sich bevorzugt um PEEK handelt.

Eine Weiterbildung der zweiten Verfahrensvariante sieht vor, dass mindestens eine Querstoßlasche mit einem Endbereich der ersten Rumpfsektion, insbesondere durch Nieten, Schrauben, Kleben, Schweißen oder eine beliebige Kombination hiervon verbunden wird, der Endbereich der zweiten Rumpfsektion mit einem, insbesondere elektrisch beheizbaren, im Endbereich angeordneten Heizelement, insbesondere einer Heizmatte erwärmt wird, und der so erwärmte Endbereich der zweiten Rumpfsektion auf den Endbereich der ersten Rumpfsektion aufgeschoben wird.

Infolge dieser Vorgehensweise ist ein einfacher Toleranzausgleich ohne weitere Zwischenschritte zwischen den zusammenzufügenden Rumpfsektionen im Bereich des Querstoßes möglich. Die Heizmatte umschließt den Endbereich der anzufügenden Rumpfsektion in Umfangsrichtung vollständig, so dass der gesamte Endbereich der anzufügenden zweiten Rumpfsektionen gleichzeitig erwärmt werden kann. Hierbei muss eine Erwärmung des Endbereichs bis mindestens in den Bereich der Erweichungstemperatur des für die Bildung der Matrix eingesetzten thermoplastischen Kunststoffmaterials der Rumpfsektionen erfolgen. Ein komplexes Messsystem, wie im Fall der ersten Verfahrensvariante ist für den Toleranzausgleich in dieser Verfahrensvariante nicht erforderlich. Der Toleranzausgleich erfolgt auf einfachste Art und Weise durch das Aufschieben des erwärmten und damit duktil verformbaren Endbereichs der zweiten, anzufügenden Rumpfsektion auf die bereits am Endbereich befestigten Querstoßlaschen der ersten Rumpfsektion. Hierbei wird der Endbereich der anzufügenden zweiten Rumpfsektion gegebenenfalls abschnittsweise gedehnt und/oder gestaucht. Die zweite Verfahrensvariante findet bevorzugt bei der Schaffung von Querstößen Anwendung, die mechanisch nur gering belastet sind, so dass in der Regel in den Rumpfsektionen im Bereich des Querstoßes keine zu verbindenden Stringer verlaufen. Die mittels dieser Verfahrensvariante erzeugten Querstöße weisen zudem den Vorteil auf, dass die Außenhäute der Rumpfsektionen im Bereich des Querstoßes versatzfrei, das heißt nahezu bündig aneinandergrenzen.

Eine vorteilhafte Weiterentwicklung der zweiten Verfahrensvariante sieht vor, dass der Endbereich der zweiten Rumpfsektion beim Abkühlen auf die mindestens eine Querstoßlasche unter Schaffung eines leichten Pressschlusses aufschrumpft.

Hierdurch wird ein besonders passgenauer und zugleich fester Sitz der angefügten zweiten Rumpfsektionen erzielt.

Weitere vorteilhafte Ausgestaltungen des Verfahrens sowie der Querstoßverbindung sind in weiteren Patentansprüchen dargelegt.
Fig. 1 zeigt in isometrischer Ansicht ein mit der ersten Verfahrensvariante hergestellten Querstoß zwischen zwei Rumpfsektionen,
Fig. 2 zeigt in Seitenansicht den Querstoß nach Fig. 1,
Fig. 3 zeigt in Draufsicht den Querstoß nach Fig. 1,
Fig. 4 zeigt eine Ansicht des Ablaufs der Herstellung einer Querstoßverbindung nach der zweiten Verfahrensvariante, und
Fig. 5 zeigt im Querschnitt einen mit der zweiten Verfahrensvariante gebildeten Querstoß zwischen zwei Rumpfsektionen.

In der Zeichnung weisen dieselben konstruktiven Elemente jeweils die gleichen Bezugsziffern auf.

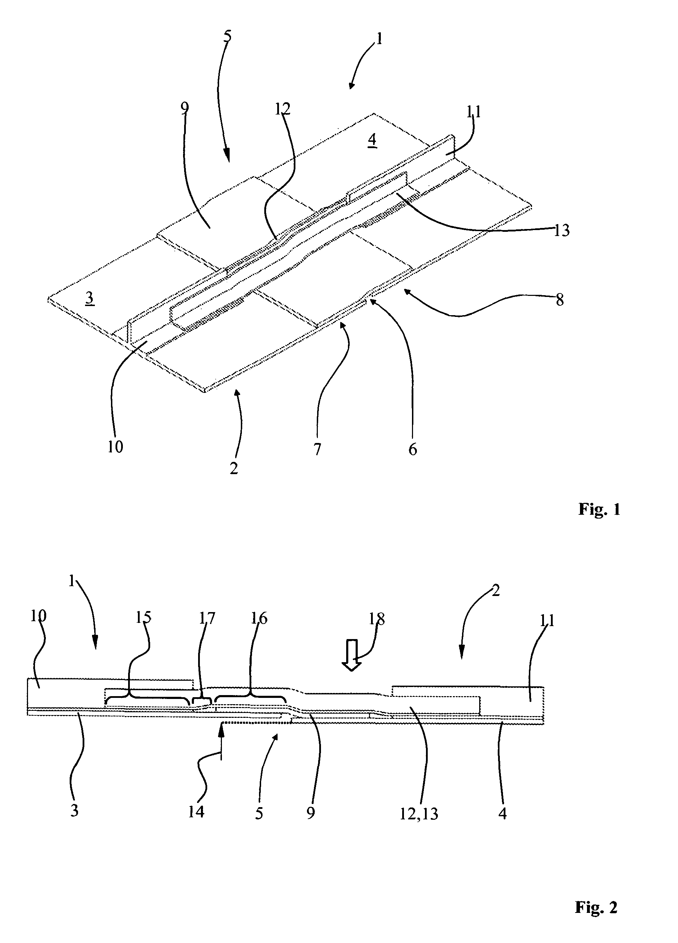

Die Fig. 1 zeigt einen perspektivischen Ausschnitt einer Ansicht eines nach Maßgabe der ersten Verfahrensvariante hergestellten Querstoßes zwischen zwei im Wesentlichen tonnenförmigen Rumpfsektionen.

Zwischen zwei Rumpfsektionen 1, 2 mit den Außenhäuten 3, 4 besteht ein Querstoß 5 mit einem Spalt 6. Die beiden Endbereiche 7, 8 der Rumpfsektionen 1, 2 sind mittels einer Querstoßlasche 9 verbunden. Auf den nicht bezeichneten Innenseiten der Außenhäute 3, 4 sind gegenüberliegend die Stringer 10, 11 befestigt, die über eine T-förmige Querschnittsgeometrie verfügen. Die Stringer 10, 11 sind jeweils beidseitig mit einer Stringerkupplung 12, 13 mit einer L-förmigen Querschnittsgeometrie verbunden. Die Verbindung der Querstoßlasche 9 mit den beiden in etwa auf Stoß verlaufenden Außenhäuten 3, 4 sowie die Verbindung der Stringerkupplungen 12, 13 mit den Stringern 10, 11 kann durch Nieten, Schrauben, Klemmen, Kleben, Schweißen oder eine beliebige Kombination hiervon erfolgen. Die Rumpfsektionen 1, 2 können in den Endbereichen 7, 8 eine von der idealen Kreisgeometrie abweichende Querschnittsgeometrie aufweisen und beispielsweise eine ovale, elliptische Querschnittsgeometrie oder nahezu jede beliebige, bevorzugt stetig gekrümmte Querschnittsgeometrie aufweisen.

Sowohl die Querstoßlasche 9 als auch die Stringerkupplung 12, 13 sind, um die Umformbarkeit bzw. die Anpassbarkeit im erwärmten Zustand zum Toleranzausgleich zu ermöglichen, mit einem faserverstärkten thermoplastischen Kunststoffmaterial gebildet, bei dem es sich bevorzugt um kohlefaserverstärktes Polyetheretherketon (PEEK) handelt. Alternativ können andere thermoplastische Hochleistungskunststoffe mit vergleichbaren mechanischen Eigenschaften eingesetzt werden. Die übrigen Komponenten der Rumpfsektionen 1, 2, insbesondere die Außenhäute 3, 4 sowie die Stringer 10, 11 sind bevorzugt mit einem faserverstärkten duroplastischen Kunststoffmaterial, beispielsweise mit einem kohlefaserverstärkten Epoxidharzsystem gebildet. Alternativ können die Außenhäute 3, 4 und/oder die Stringer 10, 11 auch mit einem faserverstärkten thermoplastischen Material, wie zum Beispiel PEEK, gebildet sein.

Die Fig. 2 illustriert eine Seitenansicht auf den Querstoß 5 in der Fig. 1.

Ein vertikaler Höhenversatz 14 zwischen den Außenhäuten 3, 4 und den Stringern 10, 11 ist durch eine im plastischen Zustand erfolgte Umformung der Querstoßlasche 9 und der beiden Stringerkupplungen 12, 13 ausgeglichen worden. Die Umformung der genannten Bauteile erfolgt in nicht dargestellten Formwerkzeugen in der Nähe der Montagelinie der Rumpfsektionen aufgrund von Ist-Geometriedaten, die mit einem vollautomatischen Messsystem, insbesondere einem computergesteuerten Laser-Messsystem im Bereich des Querstoßes 5 ermittelt und mit Soll-Geometriedaten im Querstoßbereich zwischen den Rumpfsektionen 1, 2 zur Ermittlung der Lage und des Absolutbetrags von etwaigen Toleranzabweichungen verglichen wurden.

Der Umform- bzw. der Anpassungsprozess der Querstoßlasche 9 und der Stringerkupplungen 12, 13 soll exemplarisch an der vorderen Stringerkupplung 13 erläutert werden. Zum Zweck der Umformung der vorderen Stringerkupplung 13 erfolgt beispielsweise eine Parallelverschiebung eines geradlinigen Abschnittes 15 des Stringerkupplungsprofils 13 in Relation zu einem weiteren geradlinigen Abschnitt 16 der Stringerkupplung 13, wobei ein geneigt verlaufender Mittelabschnitt 17 gebildet wird. Entsprechend wird erforderlichenfalls bei der Stringerkupplung 12 und/oder der Querstoßlasche 9 verfahren. Die Umformung der genannten Komponenten erfolgt hierbei im Wesentlichen senkrecht zu den Außenhäuten 3, 4, das heißt im gezeigten Ausführungsbeispiel in Richtung des Pfeils 18.

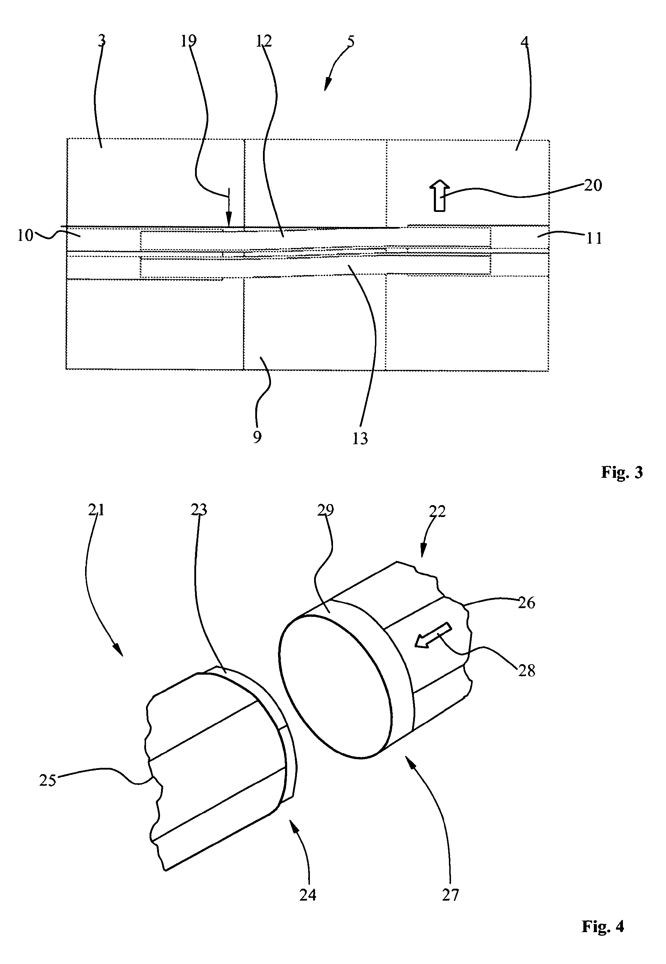

Die Fig. 3 zeigt eine Draufsicht auf den Querstoß 5 mit Querstoßlasche 9 nach Maßgabe der Fig. 1. Zwischen den Stringern 10, 11 besteht zusätzlich ein Querversatz 19 zwischen den Außenhäuten 3, 4, der durch eine Umformung bzw. Anpassung der Stringerkupplungen 12, 13 ausgeglichen wurde. Die Kompensation des Querversatzes 19 erfolgt entsprechend zur Vorgehensweise beim Ausgleich des Höhenversatzes 14 (vgl. Fig. 2) durch eine Umformung der beiden Stringerkupplungen 12, 13 quer zur Verlaufsrichtung (Längsrichtung) der Stringer 10, 11 in Richtung des Pfeils 20.

Zur Beschreibung des erfindungsgemäßen Verfahrens nach Maßgabe der ersten Variante wird zugleich auf die Fig. 1 bis 3 Bezug genommen.

Zunächst werden die Endbereiche 7, 8 der zusammenzufügenden Rumpfsektionen 1, 2 mittels eines Messsystems, vorzugsweise mittels eines vollautomatischen, computergesteuerten Lasermesssystems vermessen, um die Ist-Geometrie der Rumpfsektionen 1, 2 im Bereich des Querstoßes 5 zu ermitteln. Anschließend erfolgt die Ausrichtung der beiden Rumpfsektionen 1, 2 in Relation zueinander. Alternativ kann die Ausrichtung bereits auf der Grundlage der gemessenen Ist-Geometriedaten erfolgen. Durch die Ausrichtung der beiden Rumpfsektionen 1, 2 wird erreicht, dass die Toleranzabweichungen möglichst gleichmäßig über den Umfang hinweg verteilt und zugleich minimiert werden. Dies bedeutet, dass beispielsweise an (diametral) gegenüberliegenden Umfangspunkten des Endbereichs 7 der Rumpfsektion 2 ein jeweils nicht dargestellter Abstand zu den korrespondierenden Umfangspunkten des Endbereichs 8 der Rumpfsektion 1 möglichst gleich groß ausfällt, um den erforderlichen Toleranzausgleich über den Umfang der Rumpfsektionen 1, 2 hinweg symmetrisch zu gestalten.

Danach wird zumindest eine Querstoßlasche 9 erwärmt und mittels eines elektrisch beheizbaren Formwerkzeugs so umgeformt bzw. angepasst, dass eine vollständige Kompensation eines etwaigen Höhenversatzes 14 zwischen den Endbereichen 7, 8 der beiden Rumpfsektionen 1, 2 zum Toleranzausgleich möglich ist. Die Ansteuerung der Formwerkzeuge erfolgt hierbei aufgrund eines Vergleichs der gemessenen Ist-Geometriedaten mit den von der Konstruktion vorgegebenen Soll-Geometriedaten der Rumpfsektionen 1, 2. Anschließend wird die so umgeformte Querstoßlasche 9 mit beiden Endbereichen 7, 8 der Rumpfsektionen 1, 2 verbunden. Die Verbindung der Querstoßlasche 9 mit den Endbereichen 7, 8 kann durch Nieten, Schrauben, Klemmen, Kleben, Schweißen oder eine beliebige Kombination hiervon erfolgen. Durch wiederholtes Umformen bzw. Anpassen weiterer gegebenenfalls vorhandener Querstoßlaschen kann der Querstoß 5 und damit das Zusammenfügen der beiden Rumpfsektionen 1, 2 vollendet werden.

Im Anschluss daran werden die innenseitig in den Rumpfsektionen 1, 2 gleichmäßig über den Umfang, parallel zueinander beabstandet angeordneten Stringer 10, 11 jeweils vorzugsweise durch zwei beidseitig an den Stringern 10, 11 angeordnete Stringerkupplungen 12, 13 verbunden. Die Anpassung der Stringer 10, 11 durch Erwärmen und eine nachfolgende Umformung bzw. Anpassung erfolgt in derselben Weise wie die Anpassung der Querstoßlasche 9. Die Verbindung der Stringer 10, 11 und der Stringerkupplungen 12, 13 kann wiederum durch Nieten, Schrauben, Klemmen, Kleben, Schweißen oder eine beliebige Kombination hiervon erfolgen.

Das erfindungsgemäße Verfahren ist in der ersten Ausführungsvariante davon abhängig, dass sowohl die Querstoßlasche 9 als auch die Stringerkupplungen 12, 13 mit einem geeigneten, faserverstärkten thermoplastischen Kunststoffmaterial gebildet sind. Die übrigen Komponenten der Rumpfsektionen 1, 2, insbesondere die Außenhäute 3, 4 sowie die darin befestigten Stringer 10, 11 können auch mit einem faserverstärkten duroplastischen Kunststoffmaterial, wie beispielsweise einem kohlefaserverstärkten Epoxidharz gebildet sein. Das erfindungsgemäße Verfahren erlaubt den spannungsfreien Zusammenbau großvolumiger Rumpfsektionen 1, 2 durch die Schaffung einer Ausgleichsmöglichkeit zwischen geringfügig voneinander abweichenden Querschnittsgeometrien der Rumpfsektionen 1, 2 im Bereich des Querstoßes.

Anhand der Fig. 4 soll der Ablauf der zweiten Verfahrensvariante veranschaulicht werden. Zunächst werden eine erste und eine zweite Rumpfsektion 21, 22 zueinander ausgerichtet. Zumindest die zweite, an die erste Rumpfsektion 21 anzufügende Rumpfsektion 22 ist zumindest im Endbereich mit einem faserverstärkten thermoplastischen Kunststoffmaterial gebildet. Beispielsweise kann die Rumpfsektion 22 mit einem Polyetheretherketon (PEEK) mit einer Kohlefaserarmierung gebildet sein.

Anschließend wird mindestens eine Querstoßlasche 23 innenseitig in einem Endbereich 24 der ersten Rumpfsektion 21 mit einer Außenhaut 25 fest verbunden.

Abschließend wird eine Außenhaut 26 in einem Endbereich 27 der zweiten, anzufügenden Rumpfsektion 22 erwärmt und hierdurch hinreichend plastisch verformbar gemacht, um einen Toleranzausgleich zu ermöglichen.

Durch das Aufschieben der zweiten Rumpfsektion 22 mit dem erweichten Endbereich 27 auf die Querstoßlasche 23 in Richtung des Pfeils 28 wird das Zusammenfügen der beiden Rumpfsektionen 21, 22 unter gleichzeitigem Vollzug eines etwaig erforderlichen Toleranzausgleichs in einem weiteren Verfahrensschritt vollzogen.

Zur endgültigen Verbindung der beiden Rumpfsektionen 21, 22 ist es in der Regel erforderlich, die Querstoßlasche 23 zusätzlich mit dem Endbereich 27 der angefügten Rumpfsektion 22 durch Vernieten, Verschrauben, Verkleben, Verschweißen oder eine beliebige Kombination hiervon fest zu verbinden.

Zur Erwärmung des Endbereichs 27 wird auf diesem eine vorzugsweise elektrisch beheizbare, flexible sowie umlaufende Heizmatte 29 bzw. Manschette angeordnet. Die Heizmatte 29 verbleibt vorzugsweise bis zum vollständigen Aufschieben der zweiten Rumpfsektion 22 auf die erste Rumpfsektion 21 auf dem Endbereich 27. Die Heizmatte 29 ermöglicht in radialer Richtung einen geringfügigen Längenausgleich, um die Entstehung von Spannungen zu vermeiden und das Ablösen der Heizmatte 29 bzw. der Heizmanschette zu erleichtern.

Nach dem Aufschieben der zweiten Rumpfsektion 22 auf die erste Rumpfsektion 21 wird die Heizmatte 29 entfernt, und es kann vor dem Erkalten gegebenenfalls noch eine Glättung einer Oberseite des so gebildeten Querstoßes erfolgen. Die optionale Glättung kann beispielsweise mit Platten erfolgen, deren Geometrie mit einer gewünschten Außengeometrie des Querstoßbereichs korrespondiert und die mit hoher Anpresskraft im Bereich des Querstoßes angedrückt werden. Für den Fall, dass der Bereich des Querstoßes nach dem Entfernen der Heizmatte 29 weitgehend abgekühlt ist, sind die Platten bevorzugt mit einer integrierten elektrischen Heizung versehen, um den Bereich des Querstoßes erneut zumindest bis in den Bereich der Plastifizierungstemperatur des eingesetzten thermoplastischen faserverstärkten Kunststoffmaterials aufzuheizen und zu glätten.

Eine umfangreiche, aufwändige Vermessung und präzise Vorausrichtung der beiden Endbereiche 24, 27 der zusammenzufügenden Rumpfsektionen 21, 22 erübrigt sich im Gegensatz zur ersten Verfahrensvariante.

Für den Fall, dass der Endbereich 27 der anzufügenden zweiten Rumpfsektion 22 im Vergleich zur ersten Rumpfsektion 21 eine geringfügig verkleinerte Querschnittsgeometrie aufweist, stellt sich nach dem Abkühlen des Endbereichs 27 in Folge der durch die Abkühlung bedingten Schrumpfung ein leichter Pressschluss zwischen dem Endbereich 27 und der Querstoßlasche 23 ein, wodurch ein besonders passgenauer und zugleich fester Sitz gewährleistet ist.

Die Querstoßlasche 23 ist vorzugsweise mit einem faserverstärkten duroplastischen Material, wie beispielsweise einem kohlefaserverstärkten Epoxidharz gebildet. Das Verfahren nach Maßgabe der zweiten Variante ist nicht zur Herstellung von Querstößen in mechanisch hochbelasteten Bereichen der Flugzeugrumpfzelle vorgesehen, so dass im Bereich des Querstoßes in der Regel keine Stringer angeordnet sind und somit auch keine Stringerkupplungen vorzusehen sind.

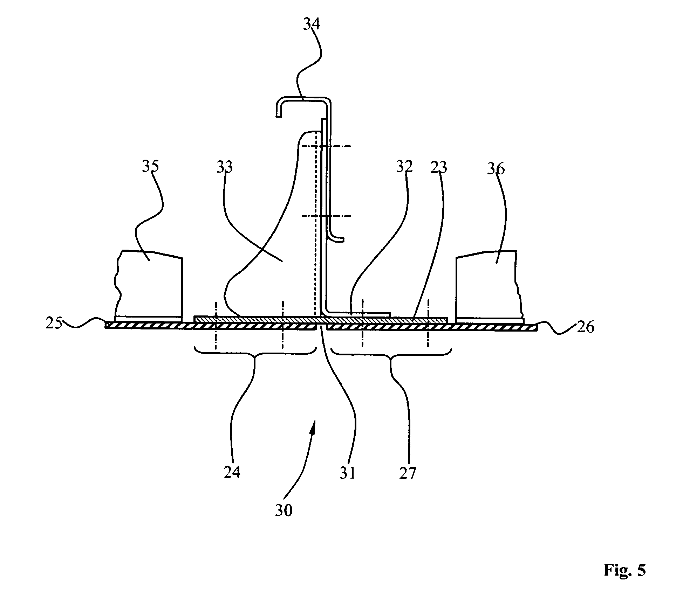

Die Fig. 5 zeigt eine Querschnittsdarstellung durch einen verfahrensgemäß gebildeten Querstoß nach Maßgabe der Fig. 4.

Die zwei Außenhäute 25, 26 sind in den Endbereichen 24, 27 mittels der Querstoßlasche 23 unter Schaffung eines Querstoßes 30 verbunden. Zwischen den beiden Außenhäuten 25, 26 verläuft ein schmaler Spalt 31. Durch die vier strichpunktierten Linien sind Befestigungsmittel, beispielsweise Nieten, Schrauben oder dergleichen, angedeutet. Im Endbereich 27 sind weiterhin ein unteres Ringspantprofil 32 sowie ein Clip 33 zur seitlichen Abstützung des Ringspants auf der Querstoßlasche 23 befestigt. Das untere Ringspantprofil 32 mit einer in etwa L-förmigen Querschnittsgeometrie ist zur Bildung einer ungefähr S-förmigen Querschnittsgeometrie mit einem oberen, umgekehrt L-förmigen Ringspantprofil 34 durch zwei Befestigungsmittel, beispielsweise Nieten, verbunden. Da die zweite Verfahrensvariante primär zur Schaffung von Querstößen in lastschwachen Bereichen der Flugzeugrumpfzelle vorgesehen ist, sind im Bereich des Querstoßes 30 die beiden Stringer 35, 36 bzw. Stringerkupplungen nicht zwingend vorhanden bzw. notwendig.

Die beiden Ringspantprofile 32, 34 sowie der Clip 33 und die fakultativ anzuordnenden Stringer 35, 36 können mit beliebigen Materialien gebildet sein.

### Bezugszeichenliste

- 1: Rumpfsektion (erste)
- 2: Rumpfsektion (zweite, anzufügende)
- 3: Außenhaut
- 4: Außenhaut
- 5: Querstoß
- 6: Spalt
- 7: Endbereich (erste Rumpfsektion)
- 8: Endbereich (zweite Rumpfsektion)
- 9: Querstoßlasche
- 10: Stringer
- 11: Stringer
- 12: Stringerkupplung
- 13: Stringerkupplung
- 14: Höhenversatz
- 15: Abschnitt (Stringerkupplung)
- 16: Abschnitt (Stringerkupplung)
- 17: Mittelabschnitt (Stringerkupplung)
- 18: Pfeil
- 19: Querversatz
- 20: Pfeil
- 21: Rumpfsektion (erste)
- 22: Rumpfsektion (zweite, anzufügende)
- 23: Querstoßlasche
- 24: Endbereich (erste Rumpfsektion)
- 25: Außenhaut
- 26: Außenhaut
- 27: Endbereich (zweite Rumpfsektion)
- 28: Pfeil
- 29: Heizmatte
- 30: Querstoß
- 31: Spalt
- 32: unteres Ringspantprofil
- 33: Clip
- 34: oberes Ringspantprofil
- 35: Stringer
- 36: Stringer

## Patentansprüche

1. Verfahren zum Verbinden von zwei mit einem faserverstärkten Kunststoffmaterial gebildeten Rumpfsektionen (1, 2, 21, 22), insbesondere gewickelten Rumpfsektionen (1, 2, 21, 22) für Flugzeugrumpfzellen, mit einer Vielzahl von innenseitig auf einer Außenhaut (3, 4, 25, 26) gleichmäßig parallel zueinander beabstandet verteilt angeordneten Stringern (10, 11, 35, 36) unter Schaffung eines Querstoßes (5, 30), umfassend die Schritte:
a) Ausrichten einer ersten und einer zweiten Rumpfsektion (1, 2, 21, 22) zueinander,
b) Erwärmen und Anpassen mindestens einer mit einem faserverstärkten thermoplastischen Kunststoffmaterial gebildeten Querstoßlasche (9, 23) derart, dass ein Toleranzausgleich zwischen abweichenden Querschnittsgeometrien der ersten und der zweiten Rumpfsektion (1, 2, 21, 22) möglich wird oder Erwärmen mindestens eines Endbereichs (27) einer zweiten mit einem faserverstärkten thermoplastischen Kunststoffmaterial gebildeten Rumpfsektion (2, 22), und
c) Zusammenfügen der beiden Rumpfsektionen (1, 2, 21, 22).

2. Verfahren nach Patentanspruch 1, **dadurch gekennzeichnet, dass** die beiden Rumpfsektionen (1, 2) mittels der mindestens einen Querstoßlasche (9) verbunden werden.

3. Verfahren nach Patentanspruch 1 oder 2, **dadurch gekennzeichnet, dass** die mindestens eine Querstoßlasche (9) mit jeweils einem Endbereich (7, 8) einer Rumpfsektion (1, 2) durch Nieten, Schrauben, Kleben, Schweißen oder eine beliebige Kombination hiervon verbunden wird.

4. Verfahren nach Patentanspruch 1 bis 3, **dadurch gekennzeichnet, dass** mindestens eine Stringerkupplung (12, 13) zum Ermöglichen eines Toleranzausgleichs erwärmt und angepasst wird.

5. Verfahren nach einem der Patentansprüche 1 bis 4, **dadurch gekennzeichnet, dass** jeweils gegenüberliegende Stringer (10, 11) einer Rumpfsektion (1, 2) jeweils mit mindestens einer Stringerkupplung (12, 13) verbunden werden.

6. Verfahren nach einem der Patentansprüche 1 bis 5, **dadurch gekennzeichnet, dass** die Stringerkupplungen (12, 13) mit den Stringern (10, 11) durch Nieten, Schrauben, Kleben, Schweißen oder eine beliebige Kombination hiervon verbunden werden.

7. Verfahren nach einem der Patentansprüche 1 bis 6, **dadurch gekennzeichnet, dass** bei der Erwärmung der mindestens einen Querstoßlasche (9) und/oder der mindestens einen Stringerkupplung (12, 13) eine Temperatur erreicht wird, die mindestens einer Erweichungstemperatur des faserverstärkten, insbesondere kohlefaserverstärkten, thermoplastischen Kunststoffmaterials entspricht.

8. Verfahren nach Patentanspruch 1, **dadurch gekennzeichnet, dass** mindestens eine Querstoßlasche (23) mit einem Endbereich (24) der ersten Rumpfsektion (21), insbesondere durch Nieten, Schrauben, Kleben, Schweißen oder eine beliebige Kombination hiervon verbunden wird, der Endbereich (27) der zweiten Rumpfsektion (22) mit einem, insbesondere elektrisch beheizbaren, insbesondere zumindest im Endbereich (27) angeordneten Heizelement, insbesondere einer Heizmatte (29) erwärmt wird, und der so erwärmte Endbereich (27) der zweiten Rumpfsektion (22) auf den Endbereich (24) der ersten Rumpfsektion (21) aufgeschoben wird.

9. Verfahren nach Patentanspruch 8, **dadurch gekennzeichnet, dass** der Endbereich (27) der zweiten Rumpfsektion (22) beim Abkühlen auf die mindestens eine Querstoßlasche (23) unter Schaffung eines Pressschlusses aufschrumpft.

10. Verfahren nach Patentanspruch 8 oder 9, **dadurch gekennzeichnet, dass** die beiden Endbereiche (24, 27) der Rumpfsektionen (21, 22) mittels der mindestens einen Querstoßlasche (23), insbesondere durch Nieten, Schrauben, Kleben, Schweißen oder eine beliebige Kombination hiervon, verbunden werden.

11. Verfahren nach einem der Patentansprüche 8 bis 10, **dadurch gekennzeichnet, dass** bei der Erwärmung des mindestens einen Endbereichs (27) der einen Rumpfsektion (22) eine Temperatur erreicht wird, die mindestens einer Erweichungstemperatur des faserverstärkten, insbesondere kohlefaserverstärkten, thermoplastischen Kunststoffmaterials entspricht.

12. Querstoßverbindung (5) zwischen zwei mit einem faserverstärkten Kunststoffmaterial gebildeten Rumpfsektionen (1, 2), insbesondere gewickelten Rumpfsektionen (1, 2), mit einer Vielzahl von innenseitig auf einer Außenhaut (3, 4) gleichmäßig parallel zueinander beabstandet verteilt angeordneten Stringern (10, 11), insbesondere nach Maßgabe des Verfahrens nach einem der Patentansprüche 1 bis 7 hergestellt, mit mindestens einer Querstoßlasche (9) und einer Vielzahl von Stringerkupplungen (12, 13), **dadurch gekennzeichnet, dass** die mindestens eine Querstoßlasche (9) und mindestens eine Stringerkupplung (12, 13) zum Ermöglichen eines Toleranzausgleichs durch thermische Umformung und Anpassung mit einem faserverstärkten thermoplastischen Kunststoffmaterial, insbesondere einem kohlefaserverstärkten Polyetheretherketon, gebildet sind.

13. Querstoßverbindung (30) zwischen zwei mit einem faserverstärkten Kunststoffmaterial gebildeten Rumpfsektionen (21, 22), insbesondere gewickelten Rumpfsektionen (21, 22), mit einer Vielzahl von innenseitig auf einer Außenhaut (25, 26) gleichmäßig parallel zueinander beabstandet verteilt angeordneten Stringern (35, 36), insbesondere nach Maßgabe des Verfahrens nach einem der Patentansprüche 8 bis 11 hergestellt, mit mindestens einer Querstoßlasche (23), **dadurch gekennzeichnet, dass** mindestens eine Rumpfsektion (21, 22) zur Ermöglichung eines Toleranzausgleichs durch erwärmungsbedingtes Plastifizieren mit einem faserverstärkten thermoplastischen Kunststoffmaterial, insbesondere einem kohlefaserverstärkten Polyetheretherketon, gebildet ist.

## Claims

1. A method for connecting two fuselage sections (1, 2, 21, 22) formed with a fibre-reinforced plastic material, in particular wound fuselage sections (1, 2, 21, 22) for aircraft fuselage cells, with a number of stringers (10, 11, 35, 36) arranged in a distributed manner uniformly spaced parallel to one another at the interior on an outer skin (3, 4, 25, 26) while producing a transverse butt joint (5, 30), comprising the steps:
a) aligning a first and a second fuselage section (1, 2, 21, 22) with respect to one another,
b) heating and adapting at least one transverse butt strap (9, 23) formed with a fibre-reinforced thermoplastic material in such a manner that a tolerance compensation becomes possible between deviating cross-sectional geometries of the first and the second fuselage section (1, 2, 21, 22) or heating at least one end portion (27) of a second fuselage section (2, 22) which is formed with a fibre-reinforced thermoplastic material, and
c) joining the two fuselage sections (1, 2, 21, 22) together.

2. The method according to claim 1, **characterised in that** the two fuselage sections (1, 2) are connected by means of the at least one transverse butt strap (9).

3. The method according to claim 1 or 2, **characterised in that** the at least one transverse butt strap (9) is connected, respectively, to an end portion (7, 8) of a fuselage section (1, 2) by riveting, screwing, adhesive bonding, welding or any combination thereof.

4. The method according to claim 1 to 3, **characterised in that** at least one stringer coupling (12, 13) is heated and adapted for enabling a tolerance compensation.

5. The method according to one of claims 1 to 4, **characterised in that** in each case opposing stringers (10, 11) of a fuselage section (1, 2) are respectively connected to at least one stringer coupling (12, 13).

6. The method according to one of claims 1 to 5, **characterised in that** the stringer couplings (12, 13) are connected to the stringers (10, 11) by riveting, screwing, adhesive bonding, welding or any combination thereof.

7. The method according to one of claims 1 to 6, **characterised in that** when heating the at least one transverse butt strap (9) and/or the at least one stringer coupling (12, 13) a temperature is reached which corresponds at least to a softening temperature of the fibre-reinforced, in particular carbon fibre reinforced, thermoplastic material.

8. The method according to claim 1, **characterised in that** at least one transverse butt strap (23) is connected to an end portion (24) of the first fuselage section (21), in particular by riveting, screwing, adhesive bonding, welding or any combination thereof, the end portion (27) of the second fuselage section (22) is heated by means of an, in particular electrically heatable, heating element, in particular arranged at least in the end portion (27), in particular a heating mat (29), and the end portion (27) of the second fuselage section (22), which end portion (27) is heated in this manner, is pushed onto the end portion (24) of the first fuselage section (21).

9. The method according to claim 8, **characterised in that** during cooling the end portion (27) of the second fuselage section (22) shrinks onto the at least one transverse butt strap (23) while producing a press-fit engagement.

10. The method according to claim 8 or 9, **characterised in that** the two end portions (24, 27) of the fuselage sections (21, 22) are connected by means of the at least one transverse butt strap (23), in particular by riveting, screwing, adhesive bonding, welding or any combination thereof.

11. The method according to one of claims 8 to 10, **characterised in that** during the heating of the at least one end portion (27) of the one fuselage section (22) a temperature is reached which corresponds at least to a softening temperature of the fibre-reinforced, in particular carbon fibre reinforced, thermoplastic material.

12. A transverse butt joint connection (5) between two fuselage sections (1, 2) formed with a fibre-reinforced plastic material, in particular wound fuselage sections (1, 2), with a number of stringers (10, 11) arranged in a distributed manner uniformly spaced parallel to one another at the interior on an outer skin (3, 4), in particular manufactured according to the method according to one of claims 1 to 7, with at least one transverse butt strap (9) and a number of stringer couplings (12, 13), **characterised in that** the at least one transverse butt strap (9) and at least one stringer coupling (12, 13) are formed with a fibre-reinforced thermoplastic material, in particular a carbon fibre reinforced polyether ether ketone, for enabling a tolerance compensation by thermal forming and adaptation.

13. A transverse butt joint connection (30) between two fuselage sections (21, 22) formed with a fibre-reinforced plastic material, in particular wound fuselage sections (21, 22), with a number of stringers (35, 36) arranged in a distributed manner uniformly spaced parallel to one another at the interior on an outer skin (25, 26), in particular manufactured according to the method according to one of claims 8 to 11, with at least one transverse butt strap (23), **characterised in that** at least one fuselage section (21, 22) is formed with a fibre-reinforced thermoplastic material, in particular a carbon fibre reinforced polyether ether ketone, for enabling a tolerance compensation by heat-induced plasticizing.

## Revendications

1. Procédé servant à relier deux sections de fuselage (1, 2, 21, 22) formées avec un matériau synthétique renforcé par des fibres, en particulier des sections de fuselage (1, 2, 21, 22) enroulées pour des cellules de fuselage d'avion, comportant une pluralité de raidisseurs (10, 11, 35, 36) répartis de manière uniforme et espacés parallèlement les uns des autres côté intérieur sur une enveloppe (3, 4, 25, 26) en créant un joint transversal (5, 30), comportant les étapes suivantes consistant à :
a) orienter une première section de fuselage et une deuxième section de fuselage (1, 2, 21, 22) l'une par rapport à l'autre,
b) échauffer et adapter au moins une éclisse de raccordement transversal (9, 23) formée avec un matériau synthétique thermoplastique renforcé par des fibres, de telle manière qu'il est possible de compenser une tolérance entre des géométries de section transversale diffétentes de la première et de la deuxième section de fuselage (1, 2, 21, 22) variables ou échauffer au moins une zone d'extrémité (27) d'une deuxième section de fuselage (2, 22) formée avec un matériau synthétique thermoplastique renforcé par des fibres, et
c) assembler les deux sections de fuselage (1, 2, 21, 22).

2. Procédé selon la revendication 1, **caractérisé en ce que** les deux sections de fuselage (1, 2) sont reliées au moyen de l'au moins une éclisse de raccordement de transversal (9)

3. Procédé selon la revendication 1 ou 2, **caractérisé en ce que** l'au moins une éclisse de raccordement transversal (9) est reliée à respectivement une zone d'extrémité (7, 8) d'une section de fuselage (1, 2) par rivetage, vissage, collage, soudage ou par une quelconque combinaison de ceux-ci.

4. Procédé selon la revendication 1 à 3, **caractérisé en ce qu'**au moins un couplage de raidisseur (12, 13) est échauffé et adapté pour permettre une compensation de la tolérance.

5. Procédé selon l'une quelconque des revendications 1 à 4, **caractérisé en ce que** des raidisseurs (10, 11) d'une section de fuselage (1, 2) se faisant respectivement face sont respectivement reliés à au moins un couplage de raidisseur (12, 13).

6. Procédé selon l'une quelconque des revendications 1 à 5, **caractérisé en ce que** les couplages de raidisseur (12, 13) sont reliés à des raidisseurs (10, 11) par rivetage, vissage, collage, soudage ou par une quelconque combinaison de ceux-ci.

7. Procédé selon l'une quelconque des revendications 1 à 6, **caractérisé en ce que**, lorsqu'on échauffe l'au moine une éclisse de raccordement transversal (9) et/ou l'au moins un couplage de raidisseur (12, 13), on atteint une température qui correspond au moins à une température de ramollissement du matériau synthétique thermoplastique renforcé par des fibres, en particulier renforcé par des fibres de carbone.

8. Procédé selon la revendication 1, **caractérisé en ce qu'**au moins une éclisse de raccordement transversal (23) est reliée à une zone d'extrémité (24) de la première section de fuselage (21), en particulier par rivetage, vissage, collage, soudage ou par une quelconque combinaison de ceux-ci, **en ce que** la zone d'extrémité (27) de la deuxième section de fuselage (22) est échauffée avec un élément de chauffage disposé en particulier au moins dans la zone d'extrémité (27), en particulier à chauffage électrique, en particulier avec une couverture chauffante (29), et **en ce que** la zone d'extrémité (27) ainsi échauffée de la deuxième section de fuselage (22) est poussée sur la zone d'extrémité (24) de la première section de fuselage (21).

9. Procédé selon la revendication 8, **caractérisé en ce que** la zone d'extrémité (27) de la deuxième section de fuselage (22) est emmanchée à chaud lors du refroidissement sur l'au moine une éclisse de joint transversal (23) en créant une fermeture à ajustement serré.

10. Procédé selon la revendication 8 ou 9, **caractérisé en ce que** les deux zones d'extrémité (24, 27) des sections de fuselage (21, 22) sont reliées au moyen de l'au moine une éclisse de raccordement transversal (23), en particulier par rivetage, vissage, collage, soudage ou par une quelconque combinaison de ceux-ci.

11. Procédé selon l'une quelconque des revendications 8 à 10, **caractérisé en ce que**, lorsqu'on échauffe l'au moins une zone d'extrémité (27) de l'au moins une section de fuselage (22), on atteint une température qui correspond au moins à une température de ramollissement du matériau synthétique thermoplastique renforcé par des fibres, en particulier renforcé par des fibres de carbone.

12. Liaison par joint transversal (5) entre deux sections de fuselage (1, 2) formées avec un matériau synthétique renforcé par des fibres, en particulier des sections de fuselage (1, 2) enroulées, comportant une pluralité de raidisseurs (10, 11) répartis de manière uniforme et espac és parallèlement les uns des autres côté intérieur sur une enveloppe (3, 4), laquelle liaison par joint transversal est fabriquée en particulier selon les modalités du procédé selon l'une quelconque des revendications 1 à 7 et comporte au moins une éclisse de raccordement transversal (9) et une pluralité de couplages de raidisseur (12, 13), **caractérisée en ce que** l'au moins une éclisse de raccordement transversal (9) et au moins un couplage de raidisseur (12, 13) sont formés avec un matériau synthétique thermoplastique renforcé par des fibres, en particulier un polyétheréthercétone renforcé par des fibres de carbone pour permettre une compensation de la tolérance par déformation et adaptation thermique.

13. Liaison par joint transversal (30) entre deux sections de fuselage (21, 22) formées avec un matériau synthétique renforcé par des fibres, en particulier des sections de fuselage (21, 22) enroulées, comportant une pluralité de raidisseurs (35, 36) répartis de manière uniforme et espacés parallèlement les uns des autres côté intérieur sur une enveloppe (25, 26), laquelle liaison par joint transversal est en particulier fabriquée selon les modalités du procédé selon l'une quelconque des revendications 8 à 11 et comporte au moins une éclisse de raccordement transversal (23), **caractérisée en ce qu'**au moins une section de fuselage (21, 22) est formée avec un matériau synthétique thermoplastique renforcé par des fibres, en particulier avec un polyétheréthercétone renforcé par des fibres de carbone pour permettre une compensation de la tolérance par plastification nécessitant un réchauffement.
